Europäisches Patentamt

European Patent Office

Office européen des brevets

(19)

(11) **EP 0 680 162 B1**

(12) **FASCICULE DE BREVET EUROPEEN**

(45) Date de publication et mention
de la délivrance du brevet:
**16.01.2002  Bulletin 2002/03**

(51) Int Cl.⁷: **H04B 7/26**

(21) Numéro de dépôt: **95400919.7**

(22) Date de dépôt: **25.04.1995**

(54) **Procédé de synchronisation accélérée d'un terminal mobile dans un réseau de radiocommunication**

Verfahren zur beschleunigten Synchronisation eines mobilen Endgeräts in einem Kommunikationsfunknetz

Method of accelerated synchronisation of a mobile terminal in a radio communication network

(84) Etats contractants désignés:
**AT BE CH DE DK ES FR GB IT LI NL SE**

(30) Priorité: **27.04.1994  FR 9405097**

(43) Date de publication de la demande:
**02.11.1995  Bulletin 1995/44**

(73) Titulaire: **ALCATEL**
**75008 Paris (FR)**

(72) Inventeurs:
• **Jouin, Christophe**
**F-75015 Paris (FR)**
• **Chanu, Frédéric**
**F-78360 Montesson (FR)**

(74) Mandataire: **Lamoureux, Bernard et al**
**COMPAGNIE FINANCIERE ALCATEL**
**Département Propriété Industrielle 30, avenue Kléber**
**75116 Paris (FR)**

(56) Documents cités:
**EP-A- 0 540 808          EP-A- 0 546 614**

## Description

La présente invention concerne de façon générale la synchronisation des terminaux mobiles dans un réseau de radiocommunication cellulaire, et en particulier un procédé permettant d'accélérer la synchronisation d'un terminal mobile dans un système à radiotéléphones.

Les systèmes de radiocommunication du type GSM sont des réseaux cellulaires dont chaque cellule est couverte d'un point de vue radio, par une station de base (BTS). Chaque cellule est identifiée vis à vis d'un terminal mobile par une fréquence sur laquelle la station de base diffuse des informations de contrôle à destination de tous les terminaux présents dans la cellule et les cellules adjacentes. Dans le système GSM, le nombre de fréquences utilisables est de 124.

Lorsqu'un terminal désire se faire connaître du réseau, il doit commencer par identifier la cellule dans laquelle il se trouve. Ceci est réalisé en écoutant successivement toutes les fréquences prévues par le système et en déterminant celles pour lesquelles le niveau de puissance est le plus élevé. Cette action appelée campagne de mesures peut prendre de 3 à 5 secondes.

Ensuite, le terminal essaye de se synchroniser sur la station de base présentant le niveau de puissance le plus élevé, et s'il n'y parvient pas, il essaye avec les autres stations de base en les prenant par niveau de puissance décroissant jusqu'à ce qu'il puisse effectivement se synchroniser.

La procédure comportant la campagne de mesures et la synchronisation est engagée systématiquement lorsque le terminal est mis en marche ou lorsque l'utilisateur du terminal demande à changer de réseau. Mais elle est également lancée à la suite d'une perte de synchronisation par exemple lorsque la liaison radio entre la station de base et le terminal a été interrompue parce que le véhicule dans lequel se trouve le terminal a emprunté un tunnel, ou de façon générale parce que le terminal est dans l'impossibilité de se synchroniser à cause de mauvaises conditions de réception radio. Malheureusement, pendant une telle synchronisation, aucun appel ne peut être passé par le terminal pendant la durée de la campagne de mesures (3 à 5 secondes) qui précède la synchronisation proprement dite. Il a été constaté auprès des utilisateurs de terminaux que ce temps d'indisponibilité est jugé trop important et conduit à une insatisfaction de leur part.

Dans le document EP-A-0540808, on traite notamment du coût et de la précision de l'opération de synchronisation une fois que la station de base a été identifiée et de la conservation de la synchronisation en fonctionnement normal, mais ne propose pas de solution à ce problème d'indisponibilité du terminal pendant la synchronisation.

C'est pourquoi le but de l'invention est de mettre en oeuvre un procédé de synchronisation d'un terminal mobile qui évite, dans les cas favorables, d'avoir à effectuer une campagne de mesures.

L'objet de l'invention est donc un procédé de synchronisation d'un terminal mobile dans un réseau de radiocommunication cellulaire dans lequel la synchronisation du terminal mobile n'a lieu qu'après détermination de la meilleure cellule au moyen d'une campagne de mesures, et comprenant les étapes de

demande de synchronisation du terminal mobile dans le but de communiquer avec une station de contrôle,
vérification qu'une campagne de mesures a déjà été effectuée,
vérification que la durée qui s'est écoulée depuis que ladite campagne de mesures a été effectuée, est inférieure à un intervalle de temps de validité prédéterminé,
si l'une ou l'autre des vérifications ci-dessus donne un résultat négatif, une campagne de mesure est alors effectuée,
synchronisation dudit terminal mobile sur la station de contrôle.

Les buts, objets et caractéristiques de la présente invention ressortiront mieux de la description qui suit en référence du procédé selon l'invention.

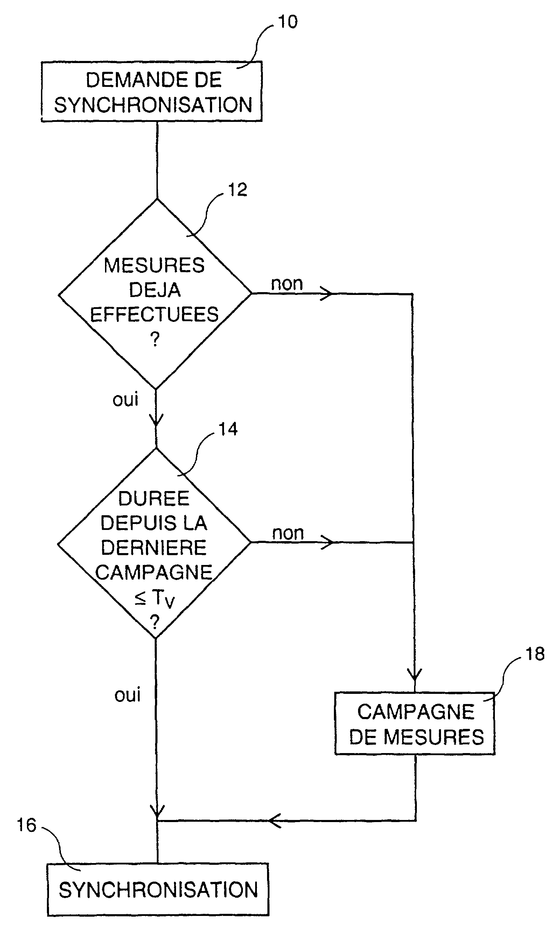

Comme illustré sur la figure unique, le procédé de synchronisation mis en oeuvre par le logiciel de commande du terminal débute par une demande de synchronisation 10. Cette demande de synchronisation peut être automatique à la mise en marche du terminal mobile, consécutive à la demande de changement de réseau par l'utilisateur ou requise par le terminal à la suite de la perte de synchronisation due par exemple à la traversée d'un tunnel par le véhicule dans lequel se trouve le terminal.

Ensuite, l'étape 12 consiste à vérifier si une campagne de mesures a déjà été effectuée, soit pour une précédente synchronisation, soit de façon automatique. En effet, de façon systématique, une campagne de mesures est effectuée de façon périodique selon une période T dont la valeur dépend du nombre de fréquences utilisées dépendant de la grandeur des cellules qui est différente selon qu'on se trouve en milieu urbain ou en milieu rural. Ainsi, la période T peut avoir une valeur allant de 5 à 60 secondes.

Cette campagne de mesures destinée à garder le terminal synchronisé sur le réseau en déterminant constamment la station de base adéquate, est effectuée de façon autonome et ne rend pas le terminal indisponible.

Puis à l'étape 14, on détermine si la durée écoulée depuis qu'a eu lieu la dernière campagne de mesures est inférieure à un intervalle de temps $T_V$ estimé comme étant la durée de validité d'une campagne de mesures en tenant compte de certains paramètres comme par exemple la grandeur des cellules. Un tel intervalle de temps peut être fixe ou bien modifiable selon l'algorithme suivant faisant intervenir le degré de mobilité du terminal dans le réseau.

Tout d'abord, la valeur de l'intervalle de temps $T_V$ doit être telle que

$$T_0 \leq T_V < T$$

où $T_0$ est une valeur arbitraire qui peut être fixée à 1 ou 2 secondes.

Soit

$$T_V = T_0 + T_{\alpha n}$$

$T_{\alpha n}$ est calculé de la façon suivante:

Considérant une valeur K prédéterminée, on compare à K la somme prise sur les 6 meilleures fréquences selon

$$\Sigma \, \frac{|P_n - P_{n-1}|}{T} > K$$

où $P_{n-1}$ représente la puissance obtenue pendant l'avant-dernière campagne de mesures et $P_n$ la puissance obtenue pendant la dernière campagne de mesures.

Si l'inégalité est vérifiée, ce qui signifie que la variation du niveau de puissance est importante et que le terminal se déplace très vite, on prend

$$T_{\alpha n} = 0$$

Sinon on prend

$$T_{\alpha n} = T_{\alpha n-1} + \Delta t$$

$$\text{avec } T_{\alpha 0} = 0$$

sachant que $\Delta t$ peut être égal à 0,5 ou 1 seconde.

Si la durée écoulée depuis la dernière campagne de mesures est inférieure à $T_V$, on n'effectue pas de nouvelle campagne de mesures comme il est prévu normalement, estimant que la précédente campagne de mesures est encore valide. L'étape de synchronisation 16 est alors mise en oeuvre.

Dans le cas où aucune campagne de mesures n'avait été effectuée (par exemple à la mise en marche du terminal) ou qu'une durée supérieure à $T_V$ s'est écoulée depuis la dernière campagne de mesures, il est alors nécessaire d'effectuer une campagne de mesures à l'étape 18 avant de mettre en oeuvre la synchronisation.

On doit noter que l'invention peut s'appliquer en dehors des campagnes de mesures effectuées de façon autonome. Ainsi il est possible qu'une demande de synchronisation ait lieu immédiatement après une précédente demande de synchronisation soit à l'intérieur de l'intervalle $T_V$. Dans ce cas, la campagne de mesures qui avait eu lieu pour la précédente synchronisation est toujours valide et on n'effectue pas de nouvelle campagne.

Un autre cas d'application de l'invention a lieu à la mise en marche du terminal. En effet, dès que le terminal est mis en marche, une procédure de synchronisation comprenant la campagne de mesures est lancée sans attendre l'identification de l'utilisateur, ceci dans le but principal de pouvoir effectuer un appel d'urgence. Puis, l'utilisateur introduit sa carte d'identification (SIM) pour pouvoir se faire reconnaître. Une nouvelle synchronisation sur le réseau préférentiel est alors effectuée. Mais de la même façon que précédemment, cette synchronisation n'est pas précédée d'une nouvelle campagne de mesures si la demande a lieu dans l'intervalle de temps TV qui suit la première campagne de mesures.

On voit donc que l'invention permet d'éviter l'indisponibilité du terminal mobile pendant 3 à 5 secondes (durée d'une campagne de mesures) lorsque les demandes de synchronisation ont lieu à des instants favorables. En plus du choix de la détermination de l'intervalle $T_V$ comme il a été mentionné ci-dessus, d'autres modifications à la portée de l'homme du métier peuvent être apportées sans sortir du cadre de l'invention.

## Revendications

1. Procédé de synchronisation d'un terminal mobile dans un réseau de radiocommunication dans lequel la synchronisation du terminal mobile n'a lieu qu'après détermination de la meilleure cellule au moyen d'une campagne de mesures, comprenant les étapes suivantes:

   demande de synchronisation du terminal mobile dans le but de communiquer avec une station de contrôle (10),
   et dans l'affirmative, vérification qu'une campagne de mesures a déjà été effectuée (12),
   vérification que la durée qui s'est écoulée depuis que ladite campagne de mesures a été effectuée, est inférieure à un intervalle de temps de validité déterminé (14),
   si l'une ou l'autre des vérifications ci-dessus donne un résultat négatif, une campagne de mesure est alors effectuée et,
   synchronisation dudit terminal mobile sur la station de contrôle (16).

2. Procédé de synchronisation selon la revendication 1, dans lequel l'intervalle de temps de validité est déterminé de façon dynamique par un algorithme tenant compte des conditions d'utilisation du terminal mobile.

3. Procédé de synchronisation selon la revendication 1 ou 2, dans lequel ladite demande de synchronisation est faite à la suite d'une perte de synchronisation dudit terminal mobile.

4. Procédé de synchronisation selon la revendication 1 ou 2, dans lequel ladite demande de synchronisation est faite à la mise en marche dudit terminal mobile.

5. Procédé de synchronisation selon l'une quelconque des revendications précédentes, utilisé dans un réseau de radiocommunication du type GSM.

6. Terminal mobile utilisé dans un réseau de radiocommunication comportant un logiciel de commande mettant en oeuvre le procédé de synchronisation selon l'une quelconque des revendications 1 à 5.

**Patentansprüche**

1. Verfahren zum Synchronisieren eines mobilen Endgeräts in einem Funk-Kommunikationsnetz, in dem die Synchronisatinon des mobilen Endgeräts erst nach Bestimmung der besten Zelle mit Hilfe einer Messreihe stattfindet, wobei das Verfahren die folgenden Schritte umfasst:

   Anfordern der Synchronisation des mobilen Endgeräts mit dem Ziel, mit einer Steuerstation zu kommunizieren (10),
   bei Erfolg, Überprüfen, dass eine Messreihe bereits durchgeführt worden ist (12),
   Überprüfen, dass die Zeitdauer seit der Durchführung der Messreihe kleiner als ein vorgegebenes Gültigkeitszeitintervall ist (14),
   wenn die eine oder andere der obigen Überprüfungen ein negatives Ergebnis liefert, Durchführen einer Messreihe und
   Synchronisieren des mobilen Endgeräts mit der Steuerstation (16).

2. Verfahren zum Synchronisieren nach Anspruch 1, bei dem das Gültigkeitszeitintervall dynamisch durch einen Algorithmus festgelegt wird, der die Anwendungsbedingungen des mobilen Endgeräts berücksichtigt.

3. Verfahren zum Synchronisieren nach Anspruch 1 oder 2, bei dem die Synchronisierungsanforderung im Anschluss an einen Synchronisationsverlust des mobilen Endgeräts erfolgt.

4. Verfahren zum Synchronisieren nach Anspruch 1 oder 2, bei dem die Synchronisierungsanforderung beim Einschalten des mobilen Endgeräts erfolgt.

5. Verfahren zum Synchronisieren nach einem beliebigen der vorhergehenden Ansprüche, angewendet in einem Funk-Kommunikationsnetz vom Typ GSM.

6. Mobiles Endgerät, das in einem Funk-Kommunikationsnetz eingesetzt wird, und das ein Steuerprogramm umfasst, welches das Synchronisationsverfahren nach einem beliebigen der Ansprüche 1 bis 5 ausführt.

**Claims**

1. A method of synchronising a mobile terminal in a mobile radio network in which synchronisation of the mobile terminal takes place only after determination of the best cell by means of a measurement campaign, the method comprising the following steps:

   requesting synchronisation of the mobile terminal in order to communicate with a control station (10),
   if affirmative, verifying that a measurement campaign has already been effected (12),
   verifying that the time elapsed since said measurement campaign was effected is less than a predetermined validity time interval,
   if either of the above verifications gives a negative result, a measurement campaign is then effected, and
   synchronising said mobile terminal to the control station (16).

2. A synchronisation method according to claim 1 wherein the validity time interval is determined dynamically by an algorithm allowing for the conditions of use of the mobile terminal.

3. A synchronisation method according to claim 1 or 2 wherein said synchronisation request is made after loss of synchronisation of said mobile terminal.

4. A synchronisation method according to claim 1 or 2 wherein said synchronisation request is made after switching on of said mobile terminal.

5. A synchronisation method according to any of the preceding claims used in a GSM type mobile radio network.

6. A mobile terminal used in a mobile radio network comprising control software implementing the synchronisation method according to any of claims 1 to 5.